Europäisches Patentamt

European Patent Office

Office européen des brevets

(19)

(11) Veröffentlichungsnummer: **0 050 302**
A1

## (12) EUROPÄISCHE PATENTANMELDUNG

(21) Anmeldenummer: **81108280.9**

(22) Anmeldetag: **13.10.81**

(51) Int. Cl.³: **F 16 C 33/76,** F 16 C 35/04

(30) Priorität: **22.10.80 DE 3039786**

(43) Veröffentlichungstag der Anmeldung: **28.04.82**
**Patentblatt 82/17**

(84) Benannte Vertragsstaaten: **BE DE FR GB IT NL SE**

(71) Anmelder: **KUHBIER GMBH & CO., Erste Mühle 3,**
**D-5272 Wipperfürth (DE)**

(72) Erfinder: **Motsch, Alfons, Dipl.-Ing.,**
**Nistenbergstrasse 38, D-5275 Bergneustadt (DE)**

(74) Vertreter: **Arentoft, Holger, Gartenstrasse 18,**
**D-5461 Kasbach-Ohlenberg (DE)**

(54) **Dichtvorsatz für ein Pendellagergehäuse.**

(57) Zwischen den Kulissenwänden (10, 17) eines Dichtvorsatzes befindet sich ein porös-elastischer, die Welle eng umschließender Dichtring (19), an dessen Umfang eine Ringfeder (20) angeordnet ist, die den Dichtring (19) radial an den Wellenumfang herandrückt.

Innerhalb der Kulissenwände (10, 17) kann der Dichtring (19) die Welle (2) auch dann optimal abdichten, wenn deren Längsachse einen begrenzten Winkel mit der Lagergehäuselängsachse (LGA) bildet. Trotz des Vorhandenseins eines solchen Winkels bleibt der Dichtdruck des Dichtringes auf den Wellenumfang rundum stets gleich.

EP 0 050 302 A1

0050302
P 448 EUR

B e s c h r e i b u n g

Die Erfindung betrifft einen Dichtvorsatz für ein Pendellagergehäuse, der auf das Pendellagergehäuse aufsteckbar und befestigbar ist und durch welche die zu lagernde Welle heraustritt.

Das Problem der Abdichtung eines in einem Pendellagergehäuse eingeschlossenen Pendellagers beschäftigt seit langem die Fachwelt. Wegen der einfachen Montage und des optimal geringen Reibungswiderstandes an einer im Pendellager gelagerten Welle setzt sich das Pendellager in der Praxis immer mehr durch. Da es oft schwierig und jedenfalls umständlich ist, ein Pendellager in einem Pendellagergehäuse vor dem Eindringen von Schmutz, Feuchtigkeit usw. zuverlässig abzudecken, werden als Pendellager fast ausschließlich geschlossene Lager verwendet, wie z.B. die sogenannt "wartungsfreien" Pendellager mit Dichtscheiben und Lithiumseifenfettfüllung, die aber den Nachteil haben, daß sie weder erwärmt noch ausgewaschen werden dürfen.

Gerade dieser Nachteil, der mehr oder weniger allen geschlossenen Lagern anhaftet, tritt besonders hervor bei Maschinenanlagen, in welchen Lebensmittel, Pharmazeutika und sonstige kritische Produkte, z.B. in der chemischen Industrie, hergestellt oder aufgearbeitet werden. In solchen Anlagen darf auf keinen Fall Schmierstoff aus den Lagern austreten und in das Erzeugnis gelangen. Auch müssen die Lagerdichtungen so effektiv sein, daß selbst bei häufigen Abspritzungen mit scharfem Spritzstrahl kein Spritzwasser in die Lager hineindringen, Schmierstoff auswaschen und Rost verursachen kann.

Die bisher bekannten Abdichtungen an Pendellagern erfüllten diese Bedingungen nicht. Wie auch an anderen Lagertypen, wurde die abzudichtende Welle bisher mittels Gummidichtlippen gedichtet, die einzeln oder doppelt angeordnet war, neuerdings unter Verwendung einer Stahlblechverstärkung. In einem geschlossenen Lager ist zu wenig Platz für eine effektive Dichtung; die Dichtlippen müssen aus räumlichen Gründen kurz und schmal gehalten werden und verschleißen entsprechend schnell. Ist aber das Pendellager in einem Pendellagergehäuse eingebracht, und die Dichtlippen an diesem angeordnet, führt die montagebedingte Schrägstellung der Welle gegenüber der Lagergehäuselängsachse dazu, daß die Dichtlippen an einer Seite stärker eingedrückt als an der anderen Seite, d.h., daß die Dichtlippen an der einen Seite unter einer höheren Belastung stehen, die wiederum zu stärkerer Erhitzung und größerem Verschleiß führt, während an der entgegengesetzten Seite der Dichtdruck nachläßt.

Die Kugeln oder Rollen eines Lagers wirken bei arbeitender Welle als Turbinenschaufeln : sie wirbeln den Schmierstoff hoch, verwandeln ihn je nach Viskosität in einen mehr oder wenig dichten Schmierstoffnebel und schleudern diesen gegen die Dichtwände. Zudem entsteht im Lagergehäuseraum ein Überdruck an beiden Dichtwänden, weil die Turbinenwirkung der Kugeln oder Rollen im Lager selbst ein Unterdruck erzeugen. Mithin wird Schmierstoff in Tröpfchengestalt an die Dichtwände geschleudert und sucht hier unter Einfluß des im Gehäuse herrschenden Überdrucks den bequemsten Ausgang ins Freie, und zwar gerade dort, wo die Dichtlippen entlastet sind. Dazu kommt, daß die Dichtfläche einer Dichtlippe relativ sehr gering ist (theoretisch ja nur ein Strich). Neuere Bestrebungen, dieses Manko dadurch zu beseitigen, daß man die Dichtlippe an einer Wulst der Welle anliegen läßt, konnten nicht zum Erfolg führen, weil ein erheblich höherer Dichtdruck notwendig war, der wiederum insbesondere an der größeren Dichtfläche zu unerwünscht großem Reibungswiderstand und entsprechender Erwärmung führte.

Aufgabe der Erfindung ist es, an einem Pendellagergehäuse eine Abdichtung der aus dem Gehäuse heraustretenden Welle zu schaffen, die erstens über eine große Dichtfläche wirkt und zum anderen einen spezifischen Dichtdruck an der Wellenzylinderfläche ausübt, der auch bei einem Winkelunterschied zwischen der Wellenachse (Lagerachse) und der Lagergehäuseachse allseitig gleichmäßig ist. Diese Abdichtung soll von außen her gegen Eindringen von Schmutz, Spritzwasser usw. in die Dichtung geschützt sein.

Diese Erfindungsaufgabe wird dadurch gelöst, daß das Pendellagergehäuse mit einem Dichtvorsatz versehen wird, der einen die abzudichtende Welle umgreifenden, sich rechtwinklig auf die Wellenlängsachse erstreckenden scheibenförmigen Hohlraum aufweist, welcher mit ringförmigen Kulissenwänden seitlich abgegrenzt ist, deren Ringöffnungen größere Querschnitte aufweisen als der Querschnitt der Welle, wobei in diesen Hohlraum ein der Welle eng umschließender poröser elastischer und im Hohlraum in Richtung quer auf die Lagergehäuselängsachse verschiebbarer Dichtring eingebracht ist, an deren Umfang ein Federring anliegt, welcher eine in Richtung nach der Welle hin wirkende radiale Kraft auf den Dichtring ausübt. Als Dichtring wird vorzugsweise ein Filzdichtring verwendet, der mit einem wärmeunempfindlichen Fett getränkt ist. Vorzugsweise ist hinter der lagerfernen Kulissenwand und einer auf dieser aufgesteckten Abschlußschale ein enger zweiter Hohlraum ausgebildet, welcher eine in diesem Hohlraum in Richtung quer auf die Lagergehäuselängsachse verschiebbare, die Welle eng umschließende, jedoch nicht mit dieser mitdrehende ringförmige Schutzscheibe aufnimmt. Zwischen der lagernächsten Wand der den Dichtring aufnehmenden Kulisse und einem inneren Haltering kann ein enger dritter Hohlraum ausgebildet sein, welcher eine der Schutzscheibe gleichen Schutzscheibe aufnimmt.

Der den Dichtring aufnehmende scheibenförmige Hohlraum kann zwischen zwei ineinandergreifenden ringförmigen Schalen entstehen, wobei die lagernächste Schale als Zwischen- und Doppelschale ausgebildet ist und mit einem der beiden Schalenkragen in das Pendellagergehäuse eingreift, während sie nach der anderen Seite hin von einem Haltering überlagert wird, indem die Ringböden der Zwischenschale und der Haltering die Kulissen für den den Dichtring aufnehmenden Hohlraum darstellen.

Ferner kann der ringförmige Schalenboden der Zwischenschale lagerseitig eine flache ringförmige Ausnehmung aufweisen, die zusammen mit einem auf dem Schalenboden der Zwischenschale lagerseitig aufliegenden inneren Haltering einen engen ringförmigen dritten Hohlraum bildet, welcher eine in Richtung quer auf die Lagergehäuselängsachse verschiebbare, die Welle eng umschließende, nicht mitdrehende zweite Schutzscheibe aufnimmt.

Zweckmäßigerweise können die Ringöffnungen der Zwischenschale, der Abschlußschale und der Halteringe konisch ausgebildet sein und beim zusammengestecken Pendellagergehäuse und Dichtvorsatz Teile eines und desselben Konusmantels bilden, welcher den Wellenumfang dort schneidet,
wo dieser von der Lagermittelebene geschnitten wird.

In einer weiteren bevorzugten Ausführungsform der Erfindung sind die ringförmigen Wände der Zwischenschale
und der Abschlußschale kugelkalottenförmig ausgebildet
und schließen einen ebenfalls kugelkalottenförmigen Hohlraum ein, welcher den elastischen und porösen Dichtring
enthält, wobei der Dichtring die abzudichtende Welle eng
umschließt, im Hohlraum quer auf die Wellenachse frei
verschiebbar angeordnet ist und an seinem Umfang von
einer ringförmigen Feder allseits radial gegen die Welle
herangedrückt wird, wobei der an seinem Umfang von einer
ringförmigen Feder allseits radial gegen die Welle herangedrückte und quer auf die Wellenachse frei verschiebbare Dichtring die Welle eng umschließt, während die
Querschnitte der Ringöffnungen der Zwischenschale und
der Abschlußschale größer sind als der Wellenquerschnitt,
und die Ringwände dieser Öffnungen miteinander einen Konusmantel bilden.

Der Dichtring ist vorteilhaft beiderseits von kugelkalottenförmigen Schutzringen flankiert, deren Ringöffnung
dem Querschnitt der Welle entspricht, die aber nicht
mit der Welle mitdreht.

Anhand der Figuren wird in der Folge ein Ausführungsbeispiel der Erfindung dargestellt und erläutert. Es zeigen :

Figur 1   ein Pendellagergehäuse mit Pendellager und
in diesem gelagerten Welle, welche mit dem
erfindungsgemäßen Dichtvorsatz abgedichtet
ist, in einer Seitenansicht und teilweise
im Längsschnitt,

Figur 2    den Dichtvorsatz in einem Länggschnitt, wobei die Welle in deren Mittellage sowie in deren äußeren Grenzlagen gestrichelt angedeutet ist,

Figur 3    den Dichtvorsatz mit kugelkalottenförmigen Dichtelementen, in einem Längsschnitt, und

Figur 4    eine kugelkalottenförmige Schutzscheibe mit Führungswülsten, in einer Draufsicht.

Die auf den Figuren aufgeführten Bezugszeichen bedeuten :

1       Pendellager

2       zu lagernde Welle

3       Schutzdeckel am geschlossenen Ende des Lagergehäuses

4,5    Lagergehäuseschalen

6       Schnappwulst an der Lagergehäuseschale 4

7       Schnappnut an der Lagergehäuseschale 4 zur Aufnahme des Schnappwulstes 6

8       Schnappwulst am Schutzdeckel 3

9       Rundnut an der Lagergehäuseschale 4 zur Aufnahme des Schnappwulstes 8

10     Zwischenschale (Doppelschale) als erste innere Kulissenwand 11      Außenwulst an der Zwischenschale 10
        (Kragen 13)

12      Rundumnut an der Lagergehäuseschale 5

13,14   Kragen der Zwischenschale 10

15      Schnappnut des Kragens 14

16      Schnappwulst des Halteringes 17

17      Haltering als äußere Kulissenwand

18      ringförmiger Hohlraum zwischen den Kulissenwänden 10,17

19      Filzdichtring

20      ringförmige Spiralfeder, um den Filzdichtring
        19 umgelegt

21      Abschlußschale des Dichtvorsatzes

22      Schnappwulst an der Abschlußschale 21

23      Schnappnut am Umfang der Zwischenschale 10,
        zur Aufnahme des Schnappwulstes 22

24      Durchgangsöffnungen am Rand der Zwischenschale 10

25      ringförmige Ausnehmung an der Abschlußschale 21
        bei aufgesteckter Abschlußschale zugleich ringf.
        Hohlraum zwischen Abschlußschale und Haltering 17,

26      äußere Schutzscheibe im Hohlraum 25

27      innere Schutzscheibe im Hohlraum 28

28      flache Ausnehmung an der Zwischenschale 10 bzw.
        Hohlraum zwischen Zwischenschale und innerem
        Haltering 29

29      innerer Haltering

30      Ausnehmung an der Zwischenschale 10 für den
        inneren Haltering 29

| 31,32 | kugelkalottenförmige Schutzscheiben |
|---|---|
| 33 | Haltesicken an den Schutzscheiben 31,32 . |
| LGA | Lagergehäuselängsachse |
| LME | Längsmittelebene des Lagers. |

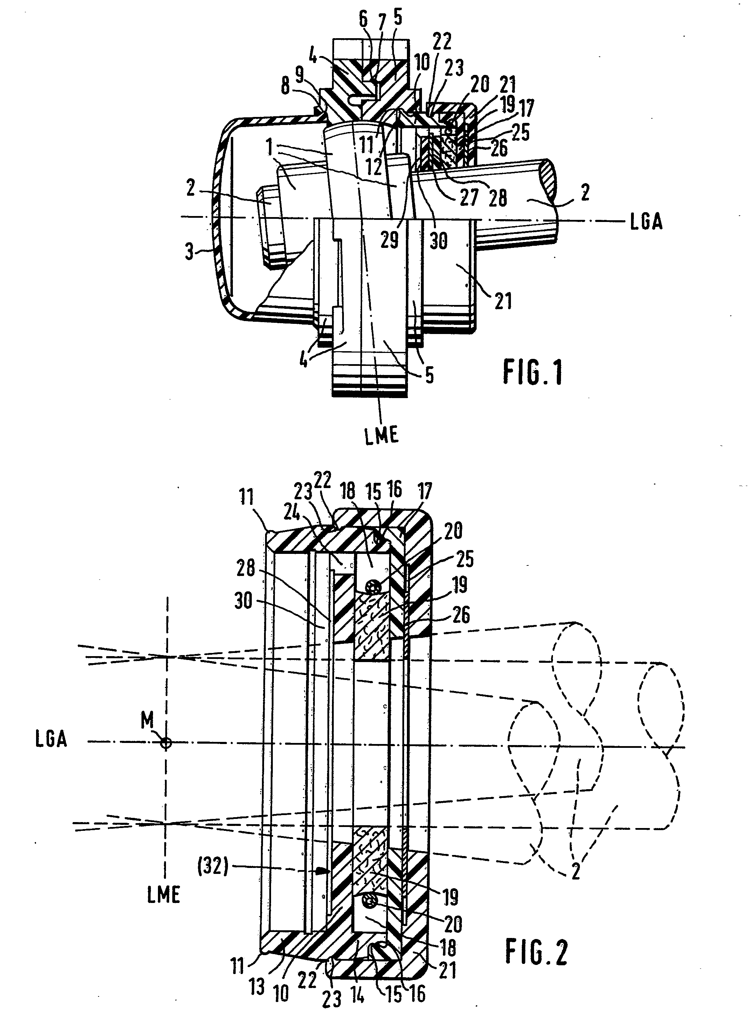

Das Pendellagergehäuse Figur 1 enthält ein Pendellager 1, in welchem eine Welle 2 gelagert ist. An dem einen Ende des Lagergehäuses, aus welchem die Welle 2 nicht heraustritt, ist ein Schutzdeckel 3 aufgesteckt. Die im Ausführungsbeispiel dargestellten Lagergehäuseteile sind aus einem geeigneten Kunststoff im Spritzgießverfahren hergestellt, z.B. aus einem Polyacetal (Polyoxymethylen). Bei der Verarbeitung von Lebensmitteln, pharmazeutischen und sonstigen chemischen Produkten u.ä. weist Kunststoff als Herstellmaterial wesentliche Vorteile auf, weil man aus der breiten Palette der verschiedenen Kunststoffe fast immer einen Kunststoff findet, der dem zu bearbeitenden Produkt gegenüber chemisch unempfindlich ist und den eine häufige Reinigung durch Abspritzen usw. nicht beeinträchtigt. Ansonsten kann der erfindungsgemäße Dichtvorsatz aus jedem beliebigem Metall erstellt und an jedem Lagergehäuse, sei es aus Metall oder aus Kunststoff angeschlossen werden.

Das im Ausführungsbeispiel beschriebene Lagergehäuse ist aus zwei ringförmigen Gehäuseschalen 4,5 zusammengesteckt, indem nach der Lehre des DE-GM 79 32 611 an der Gehäuseschale 4 Schnappwülste 6 ausgebildet sind, die in Schnappnuten 7 der Gehäuseschale 4 einschnappen und in dieser Weise das Lagergehäuse 4,5 form- und kraftschlüssig zusammenhalten. In gleicher Weise ist an dem Rand des Schutzdeckels 3 ein Schnappwulst 8 ausgebildet, der in einer Rundnut 9 der Gehäuseschale 4 einschnappt.

Über die Welle 2 ist am offenen Ende des Lagergehäuses eine Zwischenschale 10 aufgesteckt, welche mit einer Außenwulst 11 in eine Rundumnut 12 der Lagergehäuseschale 5 einschnappt. Die Zwischenschale 10 ist als Doppelschale ausgebildet und weist als solche zwei Kragen 13,14 auf; an dem lagernächsten Kragen 13 ist der Außenwulst 11 ausgebildet, während der lagerferne Kragen 14 eine Schnappnut 15 aufweist, in welcher ein Schnappwulst 16 eines Halteringes 17 einschnappt. Der ringförmige Schalenboden der Zwischenschale 10 und der Haltering 17 stellen Kulissen für einen ringförmigen Hohlraum 18 dar, in welchem ein Filzdichtring 19 angeordnet ist; der Filzdichtring 19 ist mit einem wärmebeständigen Fett (Kalziumkomplexfett) getränkt.

Um den Umfang des Filzdichtringes 19 herum ist eine Ringfeder (ringförmige Spiralfeder) 20 angeordnet, die allseitig eine radial ausgerichtete Kraft auf den Filzdichtring ausübt, also den Filzdichtring mit einem gleichmäßigen Druck an die Welle 2 herandrückt.

Während der offene Ringquerschnitt des Filzdichtringes 19 dem Querschnitt der abzudichtenden Welle 2 entspricht, sind die Ringquerschnitte der Zwischenschale 10 und des Halteringes 17 größer als der Wellenquerschnitt. Die Innenwände des Zwischenschalenbodens und des Halteringes sind konisch ausgebildet, und zwar derart, daß der sie einhüllende Konusmantel die Zylinderfläche der Welle 2 dort schneidet, wo die Welle von der Längsmittelebene LME des Pendellagers 1 geschnitten wird.

0050302

P 448 EUR

Die Zwischenschale 10 weist mehrere Durchgangsöffnungen 24 auf, die dazu dienen, das bei Ölbadschmierung in den Hohlraum 18 hineingeschleuderte Öl in
das Lagergehäuseinnere zurückfließen zu lassen,
Darüber hinaus sollen Teile dieses Öls den Umfang
des Filzdichtringes 19 erreichen und die Auflagefläche des Filzdichtringes auf der Welle schmieren.

An der Innenseite der Abschlußschale 21 ist eine flache ringförmige Ausnehmung 25 angeordnet, die nicht
ganz bis zum Schalenrand reicht. Bei aufgesteckter
Abschlußschale 21 entsteht dadurch zwischen der Abschlußschale und dem Haltering 17 ein ringförmiger
Hohlraum 25, in welchem eine der Weite des Hohlraums
angepaßte ringförmige Schutzscheibe 26 eingebracht ist.
Während die Ringöffnung der ringförmigen Abschlußschale 21 größer ist als der Querschnitt der Welle 2
und eine konisch ausgebildete Wand aufweist, deren
Konusmantelfläche den von den Ringwänden der Zwischenschale 10 und des Halteringes 17 gebildeten Konusmantel
fortsetzt, gleicht die Ringöffnung der Schutzscheibe 26
dem Querschnitt der Welle : die Schutzscheibe umschließt
zwar die Welle, folgt aber ihren Umdrehungen nicht.
Die Aufgabe der Schutzscheibe 26 ist es, Spritzwasser,
das während der Reinigung der Maschinenanlage auf das
Lagergehäuse aufgespritzt wird, abzuwehren und auch sonst
zu verhindern, daß Staub, Schmutz usw. unmittelbar an den
Filzdichtring 19 herankommen könnte.

Eine ähnliche, der Welle 2 ebenfalls umgreifende Schutzscheibe 27 kann in einem Hohlraum eingebracht sein, der
analog zu dem Hohlraum 25 zwischen einer flachen ringförmigen Ausnehmung 28 an der Zwischenschale 10 und einem zweiten (inneren) Haltering 29 gebildet wird. Dieser Haltering 29 und die Schutzscheibe 27 sind auf Fig.1 dargestellt; auf Fig.2 ist lediglich die ringförmige Ausnehmung 28 und ein weiterer Raum 30 für die Aufnahme des inneren Halteringes 29 gezeigt. Die zweite (innere) Schutzscheibe 27 ist nämlich nur bei dünnerem Schmieröl erforderlich, nicht bei dickerem, denn ihre Aufgabe ist es, ein massives seitliches Eindringen von Schmieröl an die Dichtfläche des Filzdichtringes 19 abzublocken.

Die erfindungsgemäße Abdichtung der Welle 2 nach außen hin erfolgt so : der Dichtvorsatz 10, 17, 19, 21 wird mit Spiralfeder 20 und Schutzscheiben 26,27 auf die Welle 2 aufgesteckt und mit dem Pendellagergehäuse 4,5 flüssigkeitsdicht verbunden. Danach wird die Welle 2 an der nächsten Lagerstelle gelagert; die dadurch fast immer entstehende Winkelabweichung zwischen der Lagergehäuselängsachse LGA und der Wellenlängsachse wird aufgefangen, indem das Pendellager und die Welle 2 innerhalb der durch die Konuswände des Dichtvorsatzes gegebenen Schwenkfreiheit von der Lagergehäuselängsachse ausschwenken. Trotz der Schwenkfreiheit gewährt die radiale Verschiebbarkeit des Dichtringes 19 der Welle einen optimal widerstandsarmen Lauf im Lager. Da der Filzdichtring 19 sich im Hohlraum 18 frei verschieben kann, folgt er der Schwenklage der Welle 2 und dichtet diese stets allseits gleichmäßig ab.

Die ringförmige Spiralfeder 20 sorgt dafür, daß die gesamte Ringfläche des Filzdichtringes 19 allseitig mit dem gleichen Druck auf dem Zylinderumfang der Welle 2 aufliegt. Der Filzdichtring 19 stellt mithin eine optimale Dichtung vor, die dazu noch von der Schutzscheibe 26 vor Einflüssen von außen geschützt ist.

0050302

P 448 EUR

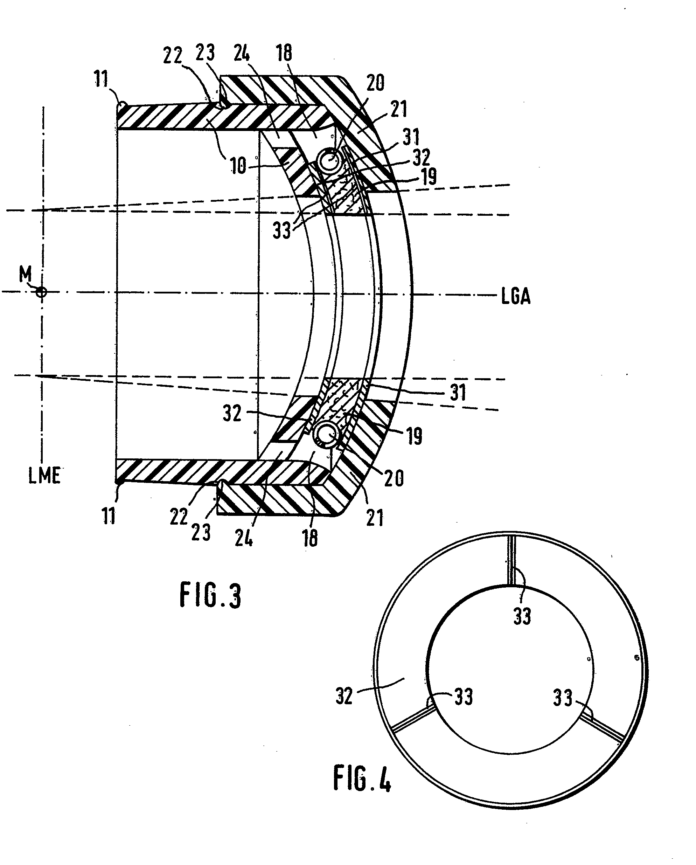

Die auf Figur 3 dargestellte Variante des Ausführungsbeispiels bietet die Möglichkeit, den erfindungsgemäßen
Dichtvorsatz mit einem größeren Schwenkwinkel auszustatten. Bei dieser Variante des Dichtvorsatzes bleibt
der spezifische Dichtdruck des Filzdichtringes 19 auf
dem Wellenumfang nämlich auch bei größeren Schwenkwinkeln vollkommen gleichmäßig.

In der Variante Figur 3 sind die Zwischenschale 10 und
die Abschlußschale 21 mit kugelkalotten- und ringförmigen
Deckelwänden versehen. Der Haltering 17 entfällt, ebenfalls die flachen Hohlräume 25,28. Ansonsten besitzen
Zwischenschale 10 und Abschlußschale 21 die vorhin beschriebenen Merkmale. Die Ringöffnungen der Zwischenschale 10 und der Abschlußschale 21 weisen wie
vorher Konusmantelform auf, indem der gemeinsame Konusmantel den Wellenzylinder in der Lagermittelebene LME
schneidet. Der Kugelmittelpunkt M der Kugelkalottenwände der Zwischenschale 10 und der Abschlußschale 21
liegt in dem Schnittpunkt der Wellenlängsachse (Lagerlängsachse) und der Lagermittelebene LME.

Zwischen den Kugelkalottenwänden der Zwischenschale 10
und der Abschlußschale 21 befindet sich ein ebenfalls
kugelkalottenförmiger Hohlraum 18, in welchen der von
zwei kugelkalottenförmigen dünnen Schutzscheiben 31,32
flankierte Filzdichtring 19 eingesteckt ist. Die dünnen
Schutzscheiben 31,32 weisen je eine zentrale Ringöffnung
auf, die den Umfang der Welle 2 eng umgreift, jedoch auf
der Welle frei drehbar bleibt.

In der dem Dichtring 19 zugewandten Fläche kann jede
Schutzscheibe 31,32 einige Haltesicken 33 aufweisen.
die in die Masse des Dichtringes eingreifen, vgl. Figur 4.

0050302
P 448 EUR

Diese Haltesicken 33 sind. nicht unbedingt erforderlich; ihre Aufgabe ist es, ein Mitdrehen des Filzdichtringes 19 mit der Welle 2 zu vermeiden, um Verschleiß und Wärmebildung vorzubeugen.

Der Dichtvorsatz in dieser Variante funktioniert im Prinzip genau wie der vorher beschriebene Dichtvorsatz. Der Unterschied liegt lediglich darin, daß der spezifische Druck des Filzdichtringes 19 auch unter größeren Schrägwinkeln des Lagers und der Welle stets gleich bleibt.

Gegenüber der herkömmlichen Abdichtung der Welle mittels doppelter Gummidichtlippen weist die erfindungsgemäße Wellendichtung vor allem den Vorteil auf, daß die Dichtfläche an der Welle sehr viel größer ist. Bei kleineren Schwenkwinkeln ist der spezifische Dichtdruck an dieser großen Fläche auch bei der ersten Version des Ausführungsbeispiels überall gleich. In der Praxis bedeutet diese Tatsache einen ausgeglichenen, überall an der Dichtfläche gleichmäßigen Reibungswiderstand, weniger Reibungswärme und weniger Verschleiß.

Holger Arentoft
Patentanwalt

<u>P a t e n t a n s p r ü c h e</u>

1. Dichtvorsatz für ein Pendellagergehäuse, mittels welchen die aus dem Pendellagergehäuse heraustretende, in dem dort eingeschlossenen Kugel- oder Rollenlager gelagerte Welle beim Heraustritt aus dem Lagergehäuse abgedichtet wird,

dadurch gekennzeichnet, daß der an der Lagergehäuseöffnung aufsteckbare Dichtvorsatz (10,17,21) einen die abzudichtende Welle (2) umgreifenden, sich rechtwinklig auf die Wellenlängsachse erstreckenden scheibenförmigen Hohlraum (18) aufweist, welcher mit ringförmigen Kulissenwänden (10,17) seitlich abgegrenzt ist, deren Ringöffnungen größere Querschnitte aufweisen als der Querschnitt der Welle (2), wobei in diesen Hohlraum (18) ein der Welle eng umschließender poröser elastischer und im Hohlraum in Richtung quer auf die Lagergehäuselängsachse (LGA) verschiebbarer Dichtring (19) eingebracht ist, an deren Umfang ein Federring (20) anliegt, welcher eine in Richtung nach der Welle (2) hin wirkende radiale Kraft auf den Dichtring (19) ausübt.

2. Dichtvorsatz nach Anspruch 1, dadurch gekennzeichnet, daß als Dichtring ein Filzdichtring (19) angeordnet ist, der mit einem wärmeunempfindlichen Fett getränkt ist.

0050302
P 448 EUR

3. Dichtvorsatz nach Anspruch 1, dadurch gekennzeichnet, daß hinter der lagerfernen Kulissenwand (17) und einer auf diese aufgesteckten Abschlußschale (21) ein enger zweiter Hohlraum (25) ausgebildet ist, welcher eine in diesem Hohlraum in Richtung quer auf die Lagergehäuselängsachse (LGA) verschiebbare, die Welle (2) eng umschließende, jedoch nicht mit der Welle (2) mitdrehende Schutzscheibe (26) aufnimmt.

4. Dichtvorsatz nach Anspruch 1, dadurch gekennzeichnet, daß zwischen der lagernächsten Wand der den Dichtring (19) aufnehmenden Kulisse (10) und einem inneren Haltering (29) ein enger dritter Hohlraum (28) ausgebildet ist, welcher eine der Schutzscheibe (26) gleichen Schutzscheibe (27) aufnimmt.

5. Dichtvorsatz nach Anspruch 1, dadurch gekennzeichnet, daß der den Dichtring (19) aufnehmende scheibenförmige Hohlraum (18) zwischen zwei kulissenbildenden, ineinandergreifenden ringförmigen Schalen (10,21) entsteht, wobei die lagernächste Schale (10) als Zwischen- und Doppelschale ausgebildet ist und mit einem der beiden Schalenkragen (13) in das Pendellagergehäuse (4,5) eingreift, während sie nach der anderen Seite hin von einem Haltering (17) überlagert wird, indem die Ringböden der Zwischenschale (10) und der Haltering (17) die Kulissen für den den Dichtring aufnehmenden Hohlraum (18) darstellen.

6. Dichtvorsatz nach Ansprüchen 1,4 u.5, dadurch gekennzeichnet, daß der ringförmige Schalenboden der Zwischenschale (10) lagerseitig eine flache ringförmige Ausnehmung (28) aufweist, die zusammen mit einem auf dem Schalenboden der Zwischenschale (10) lagerseitig aufliegenden inneren Haltering (29) einen engen ringförmigen dritten Hohlraum (28) bildet, welcher eine in Richtung quer auf die Lagergehäuselängsachse (LGA) verschiebbare, die Welle (2) eng umschließende, jedoch nicht mit dieser mitdrehende ringförmige Schutzscheibe (26) aufnimmt.

7. Dichtvorsatz nach Ansprüchen 1,3,5 und 6, dadurch gekennzeichnet, daß die Ringöffnungen der Zwischenschale (10), der Abschlußschale (21) und der Halteringe (17,29) konisch ausgebildet sind und beim zusammengestecktem Pendellagergehäuse (4,5) und Dichtvorsatz (10,17,21) Teile eines und desselben Konusmantels bilden, welcher den Wellenumfang dort schneidet, wo dieser von der Lagermittelebene (LME) geschnitten wird.

8. Dichtvorsatz nach Anspruch 1, dadurch gekennzeichnet, daß die ringförmigen Wände der Zwischenschale (10) und der Abschlußschale (21) kugelkalottenförmig ausgebildet sind und einen ebenfalls kugelkalottenförmigen Hohlraum (18) einschließen, welcher den elastischen und porösen Dichtring (19) enthält, der die abzudichtende Welle (2) eng umschließt, im Hohlraum (18) quer auf die Wellenachse frei verschiebbar angeordnet ist und von einer ringförmigen Feder (20) allseits radial und gleichmäßig gegen die Welle (2) herangedrückt wird, wobei die Querschnitte der Ringöffnungen der Zwischenschale (10) und der Abschlußschale (21) größer sind als der Wellenquerschnitt.

9. Dichtvorsatz nach Anspruch 1, dadurch gekennzeichnet, daß der Dichtring (19) beiderseits unmittelbar von ringförmigen Schutzscheiben (26,27,31,32) flankiert ist, deren Ringöffnungen dem Querschnitt der Welle (2) entspricht, die aber frei drehbar die Welle umgreifen.

FIG.1

LME

FIG.2

0050302

2/2

**FIG.3**

**FIG.4**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - C - 914 336 (GEBR. EICKHOFF, MASCHINENFABRIK U. EISENGIESSEREI MBH) <br> * Seite 2, Zeilen 27 bis 34, 62 bis 83; Fig. 2, 3 * <br> -- | 1,2,9 |
| | DE - A1 - 2 839 583 (KUHBIER GMBH & CO.) <br> * Anspruch 1; Fig. 2 * <br> -- | 1 |
| | DE - A1 - 2 839 585 (KUHBIER GMBH & CO.) <br> * Anspruch 1; Fig. 2 * <br> -- | 1,8 |
| | US - A - 2 005 446 (J.R. WINTER) <br> * Fig. 1, 2, 6 * <br> -- | 1,2 |
| | US - A - 2 985 473 (A.I. PARKER) <br> * Fig. 1, 4 * <br> -- | 1,5 |
| A,D | DE - U1 - 7 932 611 (KUHBIER GMBH & CO.) <br> -- | |
| P | DE - U1 - 8 025 770 (KUHBIER GMBH & CO.) <br> * Fig. 1 * <br> ---- | 1-6 |

**KLASSIFIKATION DER ANMELDUNG (Int. Cl.³)**

F 16 C 33/76
F 16 C 35/04

**RECHERCHIERTE SACHGEBIETE (Int. Cl.³)**

F 16 C 33/00
F 16 C 35/00
F 16 J 15/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| [X] | Der vorliegende Recherchenbericht wurde für alle Patentansprüche erstellt. |
|---|---|

| Recherchenort | Abschlußdatum der Recherche | Prüfer |
|---|---|---|
| Berlin | 03-12-1981 | MASSALSKI |

EPA form 1503.1   06.78